# EUROPÄISCHE PATENTANMELDUNG

(11) **EP 2 014 518 A1**
(43) Veröffentlichungstag der Anmeldung: **14.01.2009**
(21) Anmeldenummer: 08104556.9
(22) Anmeldetag: 26.06.2008
(51) Int. Cl.: B60R 21/00

(54) **Verfahren und Vorrichtung zum Erkennen eines Fahrzeugüberschlags**

(30) Priorität: 12.07.2007 DE 102007032591
(71) Anmelder: Continental Automotive GmbH, 30165 Hannover (DE)
(72) Erfinder: Bonitz, Jochen, 93077, Bad Abbach (DE); Duscher, Petra, 93152, Undorf (DE); Faisst, Holger, 93161, Sinzing (DE); Paggel, Jens, 93326, Abensberg (DE)

(57) **Zusammenfassung**

Zum Erkennen eines Fahrzeugüberschlages eines Kraftfahrzeugs (2) wird eine Drehrate (RATE) des Kraftfahrzeugs (2) um eine erste Fahrzeugachse und eine Beschleunigung (ACC) des Kraftfahrzeugs (2) entlang wenigstens einer zweiten, auf der ersten Fahrzeugachse senkrecht stehenden Fahrzeugachse ermittelt. Ein Beschleunigungsterm (ACC_MOD), der abhängig von der/den ermittelten Beschleunigung(en) (ACC_X, ACC_Z) ist, wird ermittelt. Ein modifizierter Drehwinkel (ANG_MOD) des Kraftfahrzeugs (2) gegenüber einer Horizontalen wird ermittelt, indem die Drehrate (RATE) mit dem Beschleunigungsterm (ACC_MOD) multipliziert und anschließend das Produkt integriert oder die Drehrate (RATE) integriert und anschließend mit dem Beschleunigungsterm (ACC_MOD) multipliziert wird. Es wird auf den Fahrzeugüberschlag erkannt, wenn die Drehrate (RATE) größer als ein von dem modifizierten Drehwinkel (ANG_MOD) abhängiger Schwellwert (THD) ist, ansonsten wird auf keinen Fahrzeugüberschlag erkannt.

## Beschreibung

Die Erfindung betrifft ein Verfahren und eine Vorrichtung zum Erkennen eines Fahrzeugüberschlags. Dazu wird eine Drehrate des Kraftfahrzeugs um eine erste Fahrzeugachse ermittelt. Ferner wird eine Beschleunigung des Kraftfahrzeuges entlang einer zweiten Fahrzeugachse ermittelt.

In einem modernen Kraftfahrzeug sind regelmäßig Sicherheitssysteme eingebaut. Die Sicherheitssysteme umfassen beispielsweise einen Airbag, einen Gurtstraffer, eine Vorrichtung zum Anlegen der Kopfstütze und/oder Sicherheitsmaßnahmen, die sich auf die Funktionalität der Brennkraftmaschine des Kraftfahrzeugs beziehen. Für derartige Sicherheitssysteme ist es regelmäßig notwendig, rechtzeitig zu erkennen, ob das Kraftfahrzeug einen Fahrzeugüberschlag durchführt.

Aus der DE 196 09 176 A1 sind ein Verfahren und eine Anordnung zum Erkennen eines Fahrzeugüberschlages bekannt. Um den Fahrzeugüberschlag rechtzeitig und mit hoher Zuverlässigkeit erkennen zu können, sind Beschleunigungssensoren vorgesehen, welche die Beschleunigungen des Fahrzeugs in Richtung seiner Gierachse, seiner Wankachse und seiner Nickachse messen. Außerdem ist mindestens ein Drehratensensor vorgesehen, der die Winkelgeschwindigkeit des Fahrzeugs bezüglich seiner Wankachse und evtl. zusätzlich bezüglich seiner Nickachse misst.

Aus der DE 100 25 260 A1 ist ein Verfahren zur Detektion von Überrollvorgängen bei Kraftfahrzeugen mit Sicherheitseinrichtungen bekannt. Zu einem die Initiallage eines Fahrzeuges angebenden Anfangslagewinkel wird ein integriertes Drehratensignal hinzuaddiert, so dass der zum augenblicklichen Neigungswinkel proportionale Wert mit einer drehratenabhängigen Auslöseschwelle verglichen werden kann. Wird diese Auslöseschwelle von dem Summenwert überschritten, erfolgt eine Auslösung einer Sicherheitseinrichtung.

Es ist Aufgabe der Erfindung, ein Verfahren und eine Vorrichtung zum Erkennen eines Fahrzeugüberschlages zu schaffen, das beziehungsweise die einfach zu einem zuverlässigen Erkennen des Fahrzeugüberschlages beiträgt.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus durch ein Verfahren und eine Vorrichtung zum Erkennen eines Fahrzeugüberschlages eines Kraftfahrzeugs. Eine Drehrate des Kraftfahrzeugs um eine erste Fahrzeugachse wird ermittelt. Eine Beschleunigung des Kraftfahrzeugs entlang wenigstens einer zweiten Fahrzeugachse wird ermittelt. Die zweite Fahrzeugachse steht senkrecht auf der ersten Fahrzeugachse. Abhängig von der/den ermittelten Beschleunigung(en) wird ein Beschleunigungsterm ermittelt. Ein modifizierter Drehwinkel des Kraftfahrzeugs gegenüber einer Horizontalen wird ermittelt, indem die Drehrate mit dem Beschleunigungsterm multipliziert und anschließend das Produkt integriert oder die Drehrate integriert und anschließend mit dem Beschleunigungsterm multipliziert wird. Auf den Fahrzeugüberschlag wird erkannt, wenn die Drehrate größer als ein von dem modifizierten Drehwinkel abhängiger Schwellwert ist ist. Ansonsten wird auf keinen Fahrzeugüberschlag erkannt.

Die Koppelung der Drehrate mit der Beschleunigung ermöglicht, den Fahrzeugüberschlag zuverlässig und rechtzeitig zu erkennen. Ferner kann so der Fahrzeugüberschlag mit lediglich geringer Rechnerleistung und/oder mit einer günstigen Sensoranordnung erkannt werden. Die erste Fahrzeugachse ist beispielsweise eine Längsachse oder eine Querachse des Kraftfahrzeugs. Die zweite Fahrzeugachse ist beispielsweise die Längsachse, die Querachse oder eine Hochachse des Kraftfahrzeugs.

In einer vorteilhaften Ausgestaltung der Erfindung wird abhängig von der Drehrate ein Drehwinkel des Kraftfahrzeugs gegenüber einer Horizontalen ermittelt. Der Schwellenwert wird abhängig von dem ermittelten Drehwinkel vorgegeben. Dies kann dazu beitragen, zu berücksichtigen, dass bei einem großen Drehwinkel des Kraftfahrzeugs gegenüber der Horizontalen nur noch eine geringe Drehenergie nötig ist, damit es zu einem Fahrzeugüberschlag kommt.

In einer vorteilhaften Ausgestaltung der Erfindung ist die Drehrate eine Nickrate und die Beschleunigung wird in Richtung einer Hoch- und/oder einer Längsachse des Kraftfahrzeugs ermittelt. Dies ermöglicht, den Fahrzeugüberschlag über einen Frontstoßfänger und über einen Heckstoßfänger zu erkennen.

In einer weiteren Ausbildung der Erfindung erfolgt die Integration der Drehrate oder der mit dem Beschleunigungsterm multiplizierten Drehrate mit einem Wichtungsfaktor, der zeitlich frühere Werte mit einem geringeren Gewicht in das Integrationsergebnis einfließen lässt. Hierdurch wird ein "Vergessfaktor" realisiert, der die Robustheit gegen fehlerhafte Auslösungen und Sensortoleranzen erhöht.

In vorteilhafter Weise können die Drahtrate und die Beschleunigung(en) vor der Weiterverarbeitung geeignet gefiltert werden. Hierdurch werden störende Frequenzanteile in den Signalen, wie sie von einem Sensor kommen können, entfernt.

Die Erfindung wird im Folgenden anhand von Ausführungsbespielen mit Hilfe von schematischen Zeichnungen näher erläutert.

Es zeigen:
- Figur 1: ein Kraftfahrzeug,
- Figur 2: ein schematisches Blockdiagramm einer Vorrichtung zum Erkennen eines Fahrzeugüberschlags,
- Figur 3: ein schematisches Blockdiagramm einer alternativen Vorrichtung zum Erkennen des Fahrzeugüberschlags,
- Figur 4: ein Flussdiagramm eines Programms zum Erkennen des Fahrzeugüberschlags.

Elemente gleicher Konstruktion oder Funktion sind figuren-übergreifend mit den gleichen Bezugszeichen gekennzeichnet.

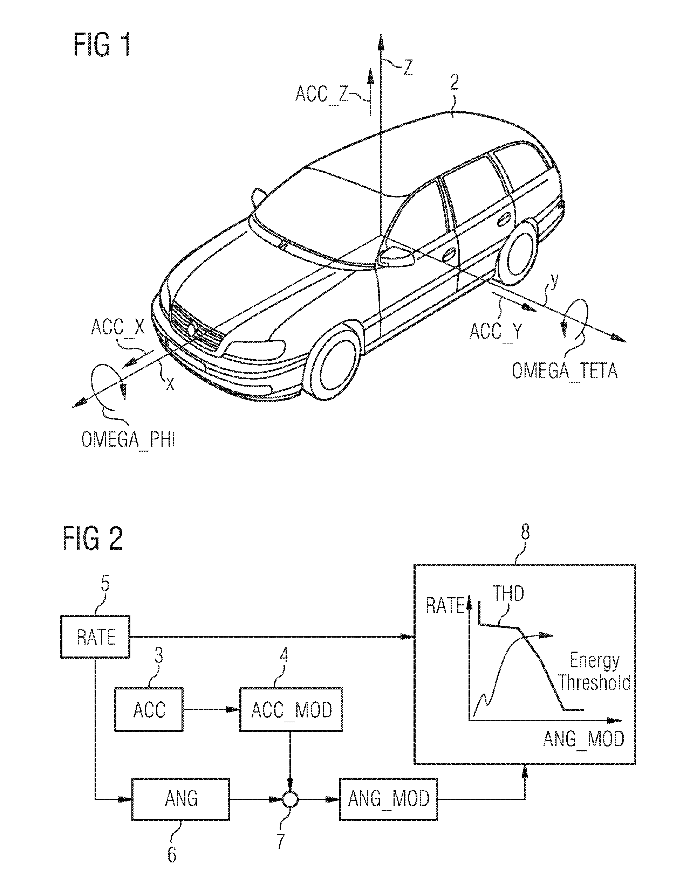

Ein Kraftfahrzeug 2 (Figur 1) weist eine Längsachse X eine Querachse Y und eine Hochachse Z auf. Falls sich das Kraftfahrzeug 2 überschlägt, also einen Fahrzeugüberschlag macht, so dreht sich das Kraftfahrzeug 2 um die Längsachse X mit einer Wankrate OMEGA PHI und/oder um die Querachse Y mit einer Nickrate OMEGA_TETA. Gleichzeitig erfährt das Kraftfahrzeug 2 eine Beschleunigung ACC X entlang der Längsachse X und/oder eine Beschleunigung ACC_Y entlang der Querachse Y und/oder eine Beschleunigung ACC_Z entlang der Hochachse Z.

Das Kraftfahrzeug 2 weist zumindest ein, vorzugsweise mehrere Sicherheitssysteme auf. Die Sicherheitssysteme umfassen beispielsweise zumindest einen Airbag, einen Gurtstraffer, eine Vorrichtung zum Betätigen einer verfahrbaren Kopfstütze, und/oder Sicherheitsmaßnahmen, die sich auf die Funktionalität einer Brennkraftmaschine des Kraftfahrzeugs beziehen, beispielsweise eine automatische Drosselung und/oder Abschaltung der Brennkraftmaschine des Kraftfahrzeugs 2. Darüber hinaus kann das Kraftfahrzeug 2 weitere Sicherheitssysteme aufweisen. Für manche der Sicherheitssysteme, beispielsweise die Gurtstraffer, ist es notwendig, dass der Fahrzeugüberschlag rechtzeitig erkannt wird. Bei anderen Sicherheitssystemen kann es auch wichtig sein, dass der Fahrzeugüberschlag nicht fälschlicherweise erkannt wird, beispielsweise bei dem Airbag.

Eine Vorrichtung zum Erkennen des Fahrzeugüberschlags umfasst gemäß Figur 2 vorzugsweise einen Beschleunigungssensor zum Erfassen einer Beschleunigung ACC. Die Beschleunigung ACC ist beispielsweise die Beschleunigung ACC X entlang der Längsachse X und/oder die Beschleunigung ACC_Y entlang der Querachse Y und/oder die Beschleunigung ACC_Z entlang der Hochachse Z. Die Vorrichtung kann zumindest teilweise von einer Steuervorrichtung des Kraftfahrzeugs 2 umfasst sein.

Die von dem Beschleunigungssensor 3 ermittelte Beschleunigung ACC wird vorzugsweise an eine erste Auswerteeinheit 4 gesendet, die abhängig von der Beschleunigung ACC einen Beschleunigungsterm ACC MOD ermittelt. Der Beschleunigungsterm ACC_MOD kann beispielsweise direkt abhängig von der Beschleunigung ACC ermittelt werden oder abhängig von Extrempunkten eines Verlaufs der Beschleunigung ACC und/oder abhängig von einer Steigung des Verlaufs der Beschleunigung ACC. Der Beschleunigungsterm ACC MOD dient dazu, einen Drehwinkel ANG, der aus einer Drehrate RATE durch Integration ermittelt wurde, abhängig von der ermittelten Beschleunigung ACC zu modifizieren. Die Drehrate RATE ist beispielsweise die Nickrate OMEGA_TETA oder die Wankrate OMEGA_PHI. Wesentlich ist, dass die Fahrzeugachse entlang der die Beschleunigung ACC ermittelt wird, senkrecht auf der Fahrzeugachse steht, um die sich das Kraftfahrzeug 2 mit der Drehrate RATE dreht. Beispielsweise ist die Drehrate RATE die Nickrate OMEGA_TETA und die ermittelte Beschleunigung ACC ist die Beschleunigung ACC_Z entlang der Hochachse Z und/oder die Beschleunigung ACC_X entlang der Längsachse X des Kraftfahrzeugs 2.

Der Beschleunigungsterm ACC_MOD trägt der Tatsache Rechnung, dass sich vorgegebene Szenarien, beispielsweise eine Fahrt über eine Rampe, ein Bordsteinanprall und/oder eine Böschungsfahrt in dem Verlauf des Beschleunigungswerts widerspiegeln. Diese Szenarien können in der ersten Auswerteeinheit 4 erkannt werden. Abhängig von dem erkannten Szenario kann dann in der ersten Auswerteeinheit 4 die ermittelte Beschleunigung ACC so modifiziert werden, dass der modifizierte Drehwinkel ANG passend zu dem erkannten Szenario bestimmt wird. Insgesamt erhöht dies die Zuverlässigkeit für das Erkennen des Fahrzeugüberschlags, was auch zu einem schnellen Erkennen des Fahrzeugüberschlags beiträgt. Wie die Beschleunigung ACC abhängig von dem Szenario zu modifizieren ist, kann beispielsweise mittels Crashtest ermittelt, aufgezeichnet und ausgewertet werden.

Zum Ermitteln der Drehrate RATE dient ein Drehratensensor 5.

Eine Integriervorrichtung 6 ermittelt abhängig von der ermittelten Drehrate RATE einen aktuellen Drehwinkel ANG des Kraftfahrzeugs 2 gegenüber einer Horizontalen.

Anschließend wird der Drehwinkel ANG mit dem Beschleunigungsterm ACC_MOD mittels eines Multiplizierers 7 multipliziert. An einem Ausgang des Multiplizierers 7 steht dann ein modifizierter Drehwinkel ANG MOD zur Verfügung. In einer Weiterbildung der Erfindung kann die Drehrate RATE vor der Integration mit einem Wichtungsterm W(t) multipliziert werden, der insbesondere zeitliche früher liegende Werte geringer wichtet, um einen "Vergessensfaktor" zu realisieren.

Eine zweite Auswerteeinheit 8 verarbeitet die Sensor- bzw. modifizierten Sensordaten mittels eines Kennfeldes, das in einer Speichervorrichtung der Vorrichtung abgelegt ist. Auf einer X-Achse des Kennfelds sind Werte angetragen, die repräsentativ für den modifizierten Drehwinkel ANG MOD sind, und auf einer Y-Achse des Kennfeldes sind Werte angetragen, die die Drehrate RATE repräsentieren. Ein Schwellwert THD unterteilt das Kennfeld im Wesentlichen in einen Bereich links des Schwellwertverlaufs, in dem keine Auslösung erfolgen soll und einen Bereich rechts des Schwellwertverlaufs, in dem eine Auslösung erfolgen soll. Eine Entscheidung wird abhängig von den Werten für die Drehrate RATE und dem modifizierten Drehwinkel ANG_MOD getroffen. Dies entspricht einem Vergleich der Drehrate RATE mit dem Schwellwert THD, der von dem aktuellen modifizierten Drehwinkel ANG MOD des Kraftfahrzeugs 2 abhängt. Damit wird der Tatsache Rechnung getragen, dass bei einem großen Drehwinkel ANG des Kraftfahrzeugs 2 gegenüber der Horizontalen nur noch eine geringe weitere Drehung des Kraftfahrzeugs 2 nötig ist, damit sich das Kraftfahrzeug 2 überschlägt.

Das Kennfeld und gegebenenfalls weitere Kennfelder können beispielsweise durch Crash-Tests ermittelt werden. Alternativ zu dem Kennfeld kann empirisch ein entsprechendes Modell ermittelt werden, anhand dessen die Drehrate RATE mit dem veränderbaren Schwellenwert THD verglichen werden kann.

Ein isoliertes Überwachen der Wankrate OMEGA_PHI und/oder der Nickrate OMEGA_TETA kann genauso zu einem unzuverlässig Erkennen des Fahrzeugüberschlags beitragen wie ein isoliertes Betrachten der Beschleunigungen entlang der genannten Fahrzeugachsen. Insbesondere kann ein Signal des Drehratensensors zum Plausibilisieren eines Signals des Beschleunigungssensors verwendet werden.

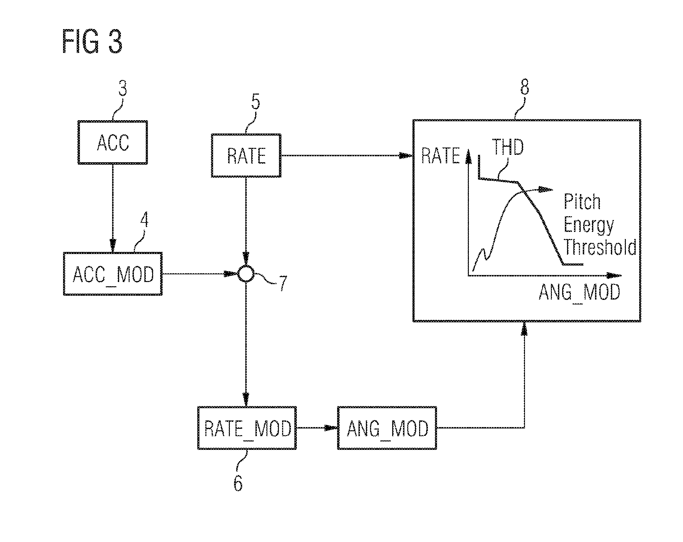

Bei einer alternativen Ausführungsform gemäß Figur 3 wird der modifizierte Drehwinkel ANG MOD abhängig von der modifizierten Drehrate RATE_MOD ermittelt. Es wird hierzu zunächst die vom Drehratensensor 5 ermittelte Drehrate RATE mit dem Beschleunigungsterm ACC_MOD mittels des Multiplizierers 7 multipliziert und erst anschließend das so erhaltene Produkt integriert. Das Ergebnis ist wieder ein modifizierter Drehwinkel ANG_MOD, der zur Beeinflussung des Schellwerts THD herangezogen wird. Alternativ wird die Position des Wertepaars (RATE, ANG MOD) im Kennfeld untersucht und eine Entscheidung aufgrund der relativen Lage zum Schwellwertverlauf THD getroffen. Auch hier kann das Produkt aus Drehrate RATE und Beschleunigungsterm ACC_MOD vor der Integration mit einem Wichtungsterm W(t) multipliziert werden, der insbesondere zeitliche früher liegende Werte geringer wichtet, um einen "Vergessensfaktor" zu realisieren.

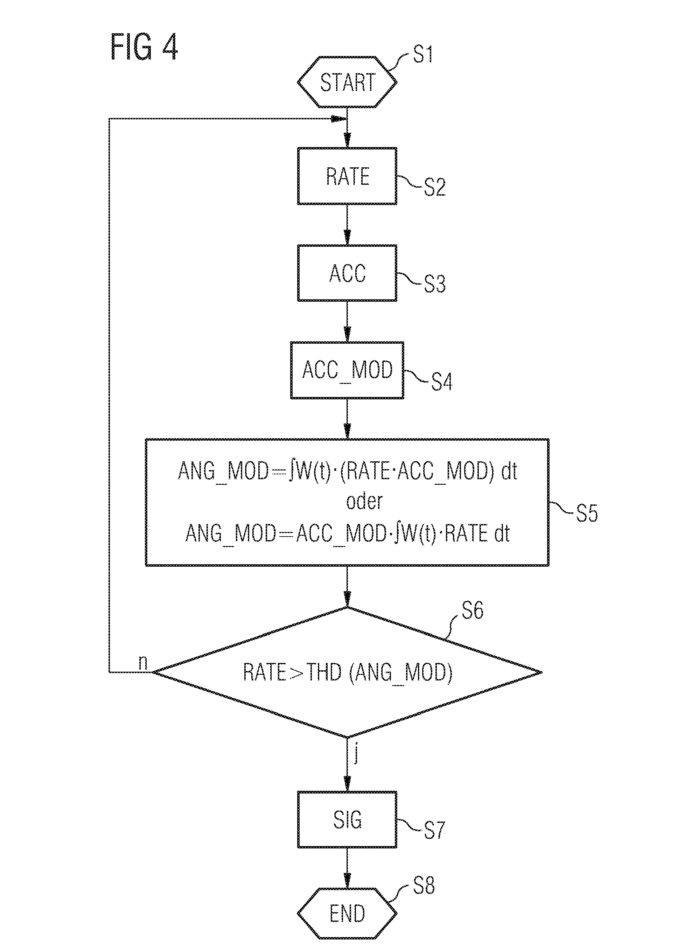

Auf der Speichervorrichtung der Vorrichtung ist ein Programm zum Erkennen des Fahrzeugüberschlags abgespeichert, das schematisch in Figur 4 als Ablaufdiagramm dargestellt ist. Das Programm dient dazu, zumindest eine der Drehraten RATE, beispielsweise die Nickrate OMEGA TETA und/oder die Wankrate OMEGA_PHI so mit zumindest einer der Beschleunigungen ACC entlang der Fahrzeugachsen zu verknüpfen, dass der Fahrzeugüberschlag rechtzeitig und präzise erkannt wird.

Das Programm wird vorzugsweise bei einem Motorstart der Brennkraftmaschine des Kraftfahrzeugs 2 in einem Schritt S1 gestartet, in dem gegebenenfalls Variablen initialisiert werden.

In einem Schritt S2 wird die Drehrate RATE um eine der Fahrzeugachsen ermittelt. Beispielsweise wird die Nickrate OMEGA_TETA um die Querachse Y des Kraftfahrzeugs 2 ermittelt.

In einem Schritt S3 wird die Beschleunigung ACC entlang einer der Fahrzeugachsen ermittelt, beispielsweise wird die Beschleunigung ACC_Z entlang der Hochachse Z ermittelt. Es können auch zwei Beschleunigungen ermittelt werden, die jedoch beide senkrecht zur Achse der ermittelten Drehrate RATE stehen. In dem Schritt S4 wird abhängig von der ermittelten Beschleunigung oder den ermittelten Beschleunigungen ACC der Beschleunigungsterm ACC_MOD ermittelt.

In einem Schritt S5 wird ein modifizierter Drehwinkel ANG_MOD abhängig von der/den Beschleunigung(en) ACC ermittelt, vorzugsweise nach einer der in dem Schritt S5 angegebenen Berechnungsvorschriften. Danach wird beispielsweise die ermittelte Nickrate OMEGA_TETA mit dem Beschleunigungsterm ACC_MOD multipliziert und anschließend das Produkt integriert. Alternativ dazu kann die ermittelte Drehrate RATE zunächst integriert und erst danach mit dem Beschleunigungsterm ACC_MOD multipliziert werden. Bedarfsweise kann ein Wichtungsterm W(t) verwendet werden.

In einem Schritt S6 wird beispielsweise anhand des Kennfeldes überprüft, ob die Drehrate RATE größer als ein vorgegebener, vom modifizierten Drehwinkel ANG_MOD abhängiger Schwellwert THD ist. Ist die Bedingung des Schritts S6 erfüllt, so wird die Bearbeitung in einem Schritt S7 fortgesetzt. Ist die Bedingung des Schritts S6 nicht erfüllt, so wird das Programm erneut ab dem Schritt S2 abgearbeitet.

In einem Schritt S7 wird ein Signal SIG erzeugt, das repräsentativ für den Fahrzeugüberschlag ist. Vorzugsweise wird das Signal SIG an die Sicherheitssysteme weitergeleitet.

In einem Schritt S8 kann das Programm beendet werden. Vorzugsweise wird das Programm jedoch regelmäßig während des Betriebs des Kraftfahrzeugs 2 abgearbeitet.

Die Erfindung ist nicht auf die angegebenen Ausführungsbeispiele beschränkt. Beispielsweise kann zum Erkennen des Fahrzeugüberschlags jede beliebige der Drehraten RATE und jede beliebige der Beschleunigungen ACC herangezogen werden. Ferner kann die Vorrichtung gemäß der Figuren 2 oder 3 auch ganz oder teilweise als Softwareprodukt umgesetzt sein und auf der Steuervorrichtung abgespeichert sein. Ferner können die erhaltenen Signale oder Zwischensignale mittels ein oder mehrerer Filter gefiltert werden. Ein Filter kann beispielsweise ein Tiefpassfilter und/oder ein Hochpassfilter umfassen.

## Patentansprüche

1. Verfahren zum Erkennen eines Fahrzeugüberschlages eines Kraftfahrzeugs (2), bei dem
- eine Drehrate (RATE) des Kraftfahrzeugs (2) um eine erste Fahrzeugachse ermittelt wird,
- eine Beschleunigung (ACC) des Kraftfahrzeugs (2) entlang wenigstens einer zweiten, auf der ersten Fahrzeugachse senkrecht stehenden Fahrzeugachse ermittelt wird,
- ein Beschleunigungsterm (ACC_MOD) ermittelt wird, der abhängig von der/den ermittelten Beschleunigung(en) (ACC_X, ACC_Z) ist,
- ein modifizierter Drehwinkel (ANG_MOD) des Kraftfahrzeugs (2) gegenüber einer Horizontalen ermittelt wird, indem die Drehrate (RATE) mit dem Beschleunigungsterm (ACC_MOD) multipliziert und anschließend das Produkt integriert oder die Drehrate (RATE) integriert und anschließend mit dem Beschleunigungsterm (ACC_MOD) multipliziert wird,
- auf den Fahrzeugüberschlag erkannt wird, wenn die Drehrate (RATE) größer als ein von dem modifizierten Drehwinkel (ANG_MOD) abhängiger Schwellwert (THD) ist,
- ansonsten auf keinen Fahrzeugüberschlag erkannt wird.

2. Verfahren nach einem der vorstehenden Ansprüche, bei dem die ermittelte Drehrate (RATE) eine Nickrate (OMEGA_TETA) des Kraftfahrzeugs (2) repräsentiert und bei dem die ermittelte Beschleunigung (ACC) eine Beschleunigung (ACC_X, ACC_Z) in Richtung einer Längs- (X) und/oder einer Hochachse (Z) des Kraftfahrzeugs (2) repräsentiert.

3. Verfahren nach einem der vorstehenden Ansprüche, bei dem die Integration der Drehrate (RATE) oder der mit dem Beschleunigungsterm (ACC_MOD) multiplizierten Drehrate (RATE_MOD) mit einem Wichtungsfaktor erfolgt, der zeitlich frühere Werte mit einem geringeren Gewicht in das Integrationsergebnis einfließen lässt.

4. Verfahren nach einem der vorstehenden Ansprüche, bei dem die ermittelte Drehrate (RATE) und/oder die ermittelte(n) Beschleunigung(en) (ACC_X, ACC_Z) vor der Weiterverarbeitung gefiltert werden.

5. Vorrichtung zum Erkennen eines Fahrzeugüberschlages eines Kraftfahrzeugs (2) zur Durchführung eines Verfahrens gemäß einem der Ansprüche 1 bis 4, wobei die Vorrichtung dazu ausgebildet ist
- eine Drehrate (RATE) des Kraftfahrzeugs (2) um eine erste Fahrzeugachse zu ermitteln,
- eine Beschleunigung (ACC) des Kraftfahrzeugs (2) entlang wenigstens einer zweiten, auf der ersten Fahrzeugachse senkrecht stehenden Fahrzeugachse zu ermitteln,
- ein Beschleunigungsterm (ACC_MOD) zu ermitteln, der abhängig von der/den ermittelten Beschleunigung(en) (ACC_X, ACC_Z) ist,
- ein modifizierter Drehwinkel (ANG_MOD) des Kraftfahrzeugs (2) gegenüber einer Horizontalen zu ermitteln, indem die Drehrate (RATE) mit dem Beschleunigungsterm (ACC_MOD) multipliziert und anschließend das Produkt integriert oder die Drehrate (RATE) integriert und anschließend mit dem Beschleunigungsterm (ACC_MOD) multipliziert wird,
- auf den Fahrzeugüberschlag zu erkennen, wenn die Drehrate (RATE) größer als ein von dem modifizierten Drehwinkel (ANG_MOD) abhängiger Schwellwert (THD) ist,
- ansonsten auf keinen Fahrzeugüberschlag zu erkennen.
